# FASCICULE DE BREVET EUROPEEN

(11) **EP 2 683 562 B1**
(45) Date de publication et mention de la délivrance du brevet: **04.03.2015**
(21) Numéro de dépôt: 12712335.4
(22) Date de dépôt: 07.03.2012
(51) Int. Cl.: B60G 7/00, B62D 17/00, B60B 27/00

(54) **DISPOSITIF DE LIAISON D'UNE ROUE A UNE STRUCTURE DE VEHICULE AUTOMOBILE**
VORRICHTUNG ZUR BEFESTIGUNG EINES FAHRZEUGRADES AN EINER KRAFTFAHRZEUGSTRUKTUR
DEVICE FOR CONNECTING A WHEEL TO A MOTOR VEHICLE STRUCTURE

(30) Priorité: 11.03.2011 FR 1152005
(43) Date de publication de la demande: 15.01.2014
(73) Titulaire: Renault S.A.S., 92100 Boulogne-Billancourt (FR)
(72) Inventeur: URRUTIA, Laurent, F-78180 Montigny-le-bretonneux (FR); ROULIN, François, F-92000 Nanterre (FR)
(86) Numéro de dépôt international: PCT/FR2012/050466
(87) Numéro de publication internationale: WO 2012/123662

(56) Documents cités:
- EP-A1- 0 538 116
- EP-A2- 1 375 202
- EP-A2- 1 410 975
- WO-A1-88/04239
- FR-A- 1 096 872
- FR-A- 1 472 127
- JP-A- 2000 313 217
- JP-A- 2003 118 340

## Description

La présente invention concerne le domaine des véhicules automobiles et, notamment les dispositifs de liaison d'une roue à la structure du véhicule.

Plus particulièrement, l'invention concerne le domaine des portes fusées de roue.

Généralement, un véhicule automobile comprend une caisse, des roues reposant sur le sol et un essieu liant la caisse aux roues. Cet essieu comprend pour chaque roue un porte fusée de roue sur lequel ladite roue est montée à rotation autour d'un axe transversal ayant une extrémité filetée, appelé « fusée de roue ». L'essieu comprend également un bras sensiblement longitudinal lié à la caisse par une première extrémité et des moyens de liaison du porte fusée à une seconde extrémité du bras opposée à la première extrémité, et une traverse déformable sensiblement transversale solidaire des bras respectifs des deux roues.

Lorsque la roue rencontre un obstacle sur le sol, cette roue subit un effort ayant une composante verticale et une composante longitudinale. Cet obstacle peut être une irrégularité du sol, une pierre, un trou ou tout autre objet ou formation en saillie ou en creux par rapport au sol. La composante verticale est amortie par la suspension du véhicule avant d'être transmise à la caisse et est donc peu ressentie par les passagers. La composante longitudinale n'est en revanche pas amortie par la suspension et est ressentie comme un choc par les passagers du véhicule.

Il est connu de prévoir que l'essieu permette un déplacement longitudinal du centre de roue lorsque la roue rencontre un obstacle, de façon à améliorer le confort des passagers. Dans ce but, on choisit un essieu dont la cinématique impose au centre de roue, en cas d'obstacle, un mouvement de rotation autour d'un axe transversal situé proche du point de contact entre la roue et le sol.

On peut se référer au document FR 2875742 qui décrit un véhicule automobile muni de moyens de guidage de chaque porte fusée en déplacement sur une trajectoire longitudinale comprenant un organe de guidage disposé sur le bras et coopérant avec des trous oblongs situés sur le porte fusée de roue. Toutefois, un tel système est difficile à mettre en place et nécessite une modification de la structure du véhicule. De plus, bien que le déplacement longitudinal du centre de roue, appelé « recul de roue », soit guidé, les moyens de guidage ne permettent pas d'amortir convenablement la composante longitudinale.

En outre, chacun des documents EP1375202 A2, FR1096872 A, EP0538116 A1 et FR1472127 A divulgue un dispositif de liaison pertinent dans ce contexte.

Un objectif de l'invention est donc de pallier ces inconvénients et de fournir un dispositif de liaison d'une roue à la structure d'un véhicule automobile permettant d'améliorer l'amortissement de la composante longitudinale, facile à mettre en place, tout en étant adaptable à tous les types d'essieu.

Selon un mode de réalisation, l'invention a pour objet un dispositif de liaison d'une roue à une structure de véhicule automobile comprenant un porte fusée de roue supportant une fusée de roue, avec un premier axe sensiblement transversal, sur laquelle est montée à rotation la roue et deux moyens de liaison à la structure du véhicule.

Les moyens de liaison et la fusée de roue sont disposés sur un même axe vertical, perpendiculaire audit premier axe sensiblement transversal, le premier moyen de liaison étant disposé entre la fusée de roue et le deuxième moyen de liaison.

Ainsi, les avantages du système sont :
- la compacité de la solution par la réduction de la masse et du dimensionnement,
- l'optimisation du fonctionnement du premier axe transversal constitué par l'articulation hydroélastique,
- le positionnement au plus près du sol du deuxième moyen de liaison permettant de désensibiliser le système aux efforts de freinage.

Avantageusement, le porte fusée de roue, la fusée de roue et les moyens de liaison forment un sous ensemble unique monté sur la structure du véhicule.

Le premier moyen de liaison comprend une articulation hydro élastique, avec un deuxième axe sensiblement transversal, montée sur le porte fusée de roue.

Par exemple, l'articulation hydro élastique comprend une bague intérieure, une bague extérieure, un élément élastique disposé entre lesdites bagues et un liquide amortisseur, l'articulation hydro élastique, avec un deuxième axe transversal, étant montée sur un axe transversal relié à la structure du véhiculé.

Avantageusement, le deuxième moyen de liaison comprend une articulation pivot avec un troisième axe transversal parallèle aux premier et deuxième axes transversaux, de manière à faire pivoter le dispositif de liaison autour dudit troisième axe sensiblement transversal et à le guider en déplacement sur une trajectoire courbe longitudinale.

La trajectoire peut être un arc de cercle centré sur le troisième axe transversal du deuxième moyen de liaison, le troisième axe transversal étant proche du point de contact de la roue sur le sol.

Le sous ensemble peut être monté soit directement sur la structure du véhicule soit par l'intermédiaire d'un plateau fusée.

Par exemple, le deuxième moyen de liaison comprend un roulement.

Le roulement peut être un roulement à rouleaux coniques ou à deux rangées de billes.

Le liquide amortisseur peut être du glycol.

Selon un second aspect, l'invention concerne un véhicule automobile comprenant une caisse, au moins deux roues reposant sur le sol et un essieu liant la caisse aux roues. L'essieu comprend un dispositif de liaison tel que décrit ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue de face d'un dispositif de liaison selon l'invention,
- la figure 2 est une vue en coupe d'un dispositif de liaison selon la figure 1 monté entre un moyeu de roue et la structure d'un véhicule automobile ;
- la figure 3 est une vue schématique en perspective d'un dispositif de liaison selon la figure 1 monté sur la structure d'un véhicule ; et
- la figure 4 est une vue de détail d'un moyen de liaison selon la figure 2.

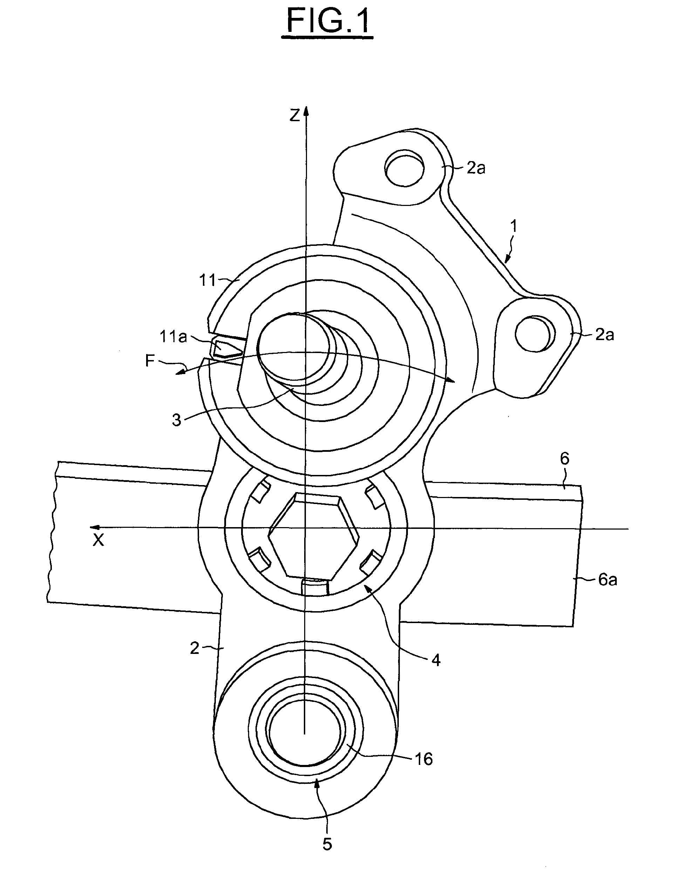

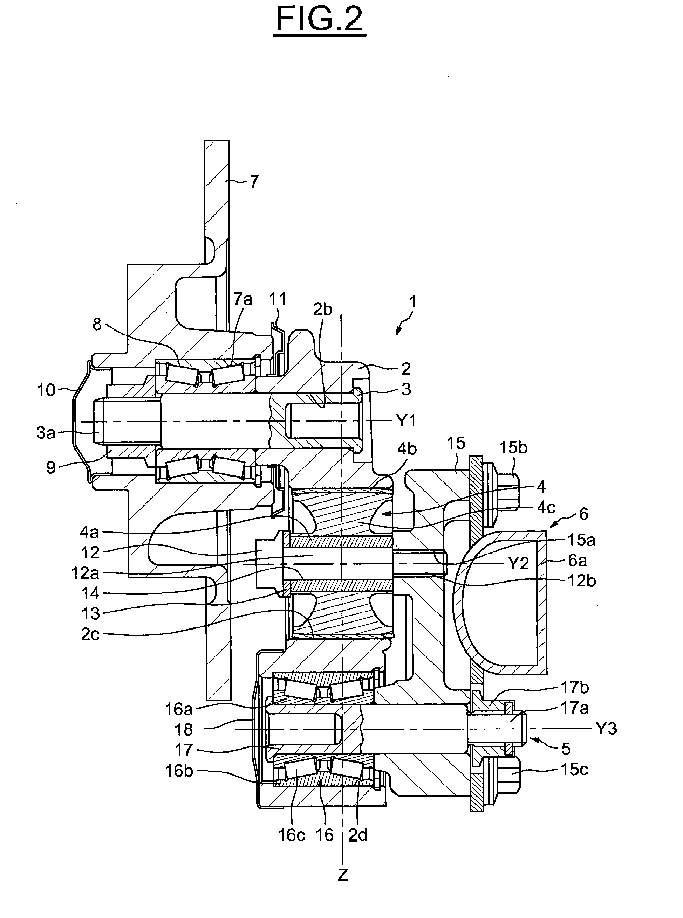

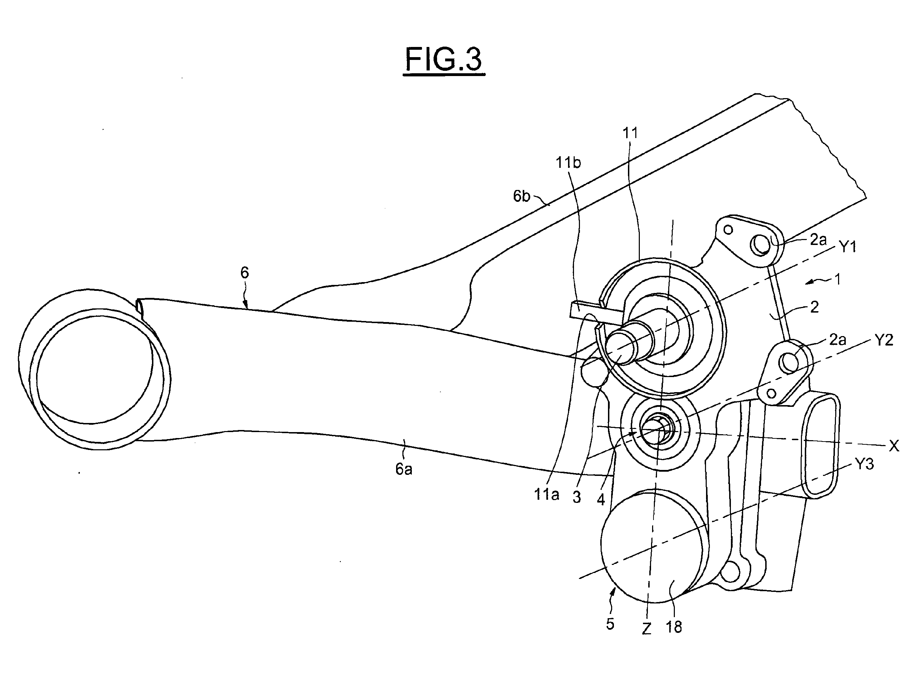

Tel qu'illustré sur les figures 1 à 3, le dispositif de liaison d'une roue à un véhicule automobile (non représenté), référencé 1 dans son ensemble, comprend un porte fusée de roue 2 supportant une fusée de roue 3 et deux moyens de liaison 4, 5 à la structure 6 du véhicule. La fusée de roue 3 et les deux moyens de liaison 4, 5 sont disposés sur un même axe sensiblement vertical Z, perpendiculaire à l'axe longitudinal X du véhicule. Tel qu'illustré sur la figure 2, le dispositif de liaison 1 est destiné à relier une roue (non représentée) par l'intermédiaire d'un moyeu de roue 7 à une structure 6 d'un véhicule automobile, tel qu'un essieu. L'essieu 6 comprend un bras 6a sensiblement longitudinal lié à la caisse du véhicule (non représentée) par une première extrémité et au dispositif de liaison 1 par une deuxième extrémité, opposée à la première extrémité. L'essieu 6 comporte également une traverse transversale déformable 6b solidaire des bras 6a respectifs de deux roues. Le porte fusée de roue 2 comprend également des ailettes 2a situées en partie supérieure du porte fusée de roue 2 assurant la fixation des étriers de frein (non représentés).

La fusée de roue 3, d'axe transversal Y₁, est un arbre de forme fuselée, inséré dans un alésage 2b du porte fusée de roue 2. La fusée de roue 3 supporte les roulements à rouleaux coniques 8 du moyeu de roue 7 et présente une extrémité filetée 3a coopérant avec un écrou de réglage 9 destiné à régler le roulement à rouleaux coniques 8. La fusée de roue 3 vient donc s'insérer dans l'alésage 7a du moyeu de roue 7 et la roue (non représentée) est ainsi montée à rotation sur la fusée de roue 3. Un capot de protection 10 peut être disposé à une extrémité de l'alésage 7a du moyeu de roue 7 afin d'éviter la pénétration de polluants dans l'alésage 7a et dans le roulement à rouleaux coniques 8. Tel qu'illustré sur les figures 1 à 3, un support de capteur 11, d'axe Y₁, est disposé sur le porte fusée de roue 2. Le support de capteur 11, de forme générale circulaire, comprend une encoche 11a destinée à coopérer avec un capteur 11b de rotation de la roue.

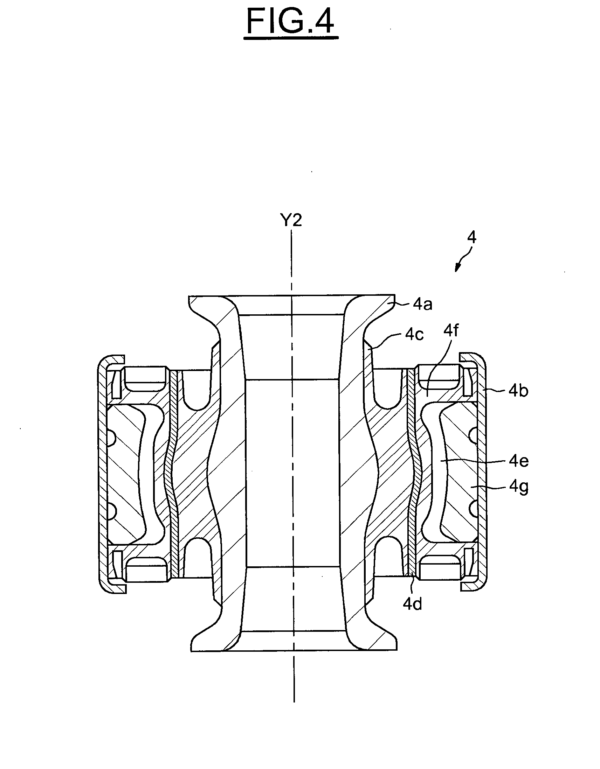

Le premier moyen de liaison 4, d'axe transversal Y₂ parallèle à l'axe Y₁, comprend une articulation hydro élastique comportant une bague intérieure 4a, une bague extérieure 4b et un élément élastique 4c, par exemple, du caoutchouc, disposé entre les bagues intérieure 4a et extérieure 4b. L'articulation hydro élastique 4 est montée serrée dans un alésage 2c situé sur le porte fusée de roue 2. Un ensemble vis 12 et rondelle 13 assure le maintien en translation suivant l'axe transversal Y₂ de l'articulation hydro élastique 4. En effet, la partie cylindrique 12a de la vis 12 est insérée dans l'alésage 14 de la bague intérieure 4a et la partie filetée 12b de la vis 12 est vissée dans un taraudage 15a pratiqué sur un plateau fusée 15 destiné à être fixé à l'essieu 6. En variante, on pourrait envisager que le taraudage 15a soit directement pratiqué sur une partie de l'essieu 6. La liaison hydro élastique 4 permet de maitriser et de limiter le débattement du porte fusée de roue 2. Un exemple d'articulation hydro élastique 4 sera détaillé à la figure 4. Toutefois, l'utilisation d'une articulation hydro élastique différente de celle décrite pourrait être envisagée dans la mesure où l'effet est similaire.

Le deuxième moyen de liaison 5, d'axe transversal Y₃ parallèle aux axes Y₁ et Y₂, comprend une liaison pivot réalisée par un roulement 16, tel que par exemple un roulement à rouleaux coniques supporté par un arbre transversal 17 présentant une extrémité filetée 17a. Le roulement à rouleaux coniques 16 comprend une bague intérieure 16a, une bague extérieure 16b et une ou deux rangées de rouleaux coniques 16c disposées entre les bagues 16a, 16b. La bague extérieure 16b est montée serrée dans un alésage 2d, d'axe Y₃, du porte fusée de roue 2, de sorte que le porte fusée de roue 2 pivote autour de l'axe Y₃. L'extrémité filetée 17a de l'arbre transversal 17 coopère avec un écrou 17b et permet d'assurer une fixation sur le plateau fusée 15. Un capot de protection 18 peut être disposé à une extrémité de l'alésage 2d du porte fusée 2 afin d'éviter la pénétration de polluants dans le roulement à rouleaux coniques 16. En variante, on pourrait envisager l'utilisation d'un roulement à double rangée de billes. Le plateau fusée 15 est ensuite fixé par le biais de deux vis 15b, 15c à l'essieu 6.

Le porte fusée de roue 2, la fusée de roue 3 et les deux moyens de liaison 4, 5 forment un unique sous ensemble 1, formant le dispositif de liaison, destiné à être monté sur la structure 6 du véhicule. Le plateau fusée 15 pourrait en variante faire partie de ce sous ensemble 1. Toutefois, on pourrait envisager une fixation du porte fusée 2 directement sur l'essieu 6.

L'axe vertical Z est perpendiculaire aux axes transversaux Y₁, Y₂, Y₃.

Le premier moyen de liaison 4 est disposé entre la fusée de roue 2 et le deuxième moyen de liaison 5, de manière à faire pivoter le porte fusée de roue 2 autour de l'axe transversal Y₃ et à le guider en déplacement sur une trajectoire courbe longitudinale suivant la flèche F illustrée à la figure 1, sensiblement suivant l'axe X, en cas de présence d'un obstacle sur le sol. En effet, lorsque la roue rencontre un obstacle sur le sol, cette roue subit un effort ayant une composante longitudinale et verticale. La composante longitudinale, suivant l'axe X, s'applique directement à la fusée de roue 3, et engendre un déplacement de la roue. Ce déplacement de la roue est appelé « recul de roue ». Le recul de roue, en cas d'obstacle permet de diminuer les efforts transmis au train de roue du véhicule.

Grâce à la liaison pivot 5, qui autorise la rotation du porte fusée de roue 2 suivant l'axe Y₃, le déplacement de la fusée de roue 3 présente un mouvement oscillatoire dont la trajectoire est un arc de cercle suivant la flèche F, centré sur l'axe transversal Y₃ du deuxième moyen de liaison 5. Plus l'axe transversal Y₃ est proche du point de contact de la roue sur le sol, plus cette trajectoire sera longitudinale suivant l'axe X.

Le roulement 16 de la liaison pivot 5 permet de bloquer les translations suivants tous les axes X, Y, Z, ainsi que les rotations suivant les axes X et Z, permettant ainsi de régler le carrossage des roues. Le carrossage étant l'angle entre la roue et le plan perpendiculaire au sol, suivant l'axe Z. Le réglage du carrossage permet d'obtenir une usure uniforme du pneu.

La rotation du porte fusée de roue 2 suivant l'axe Y₃ est autorisée par la liaison pivot 5 mais son débattement est limité par la liaison hydro élastique 4, par exemple d'une amplitude d'environ 10 mm, ce qui permet de maitriser le recul de roue.

Telle qu'illustrée sur la figure 4, l'articulation hydro élastique 4, d'axe Y₂, comprend une bague intérieure 4a, une bague extérieure 4b, un élément élastique 4c disposé entre lesdites bagues 4a, 4b. L'articulation hydro élastique 4 comprend également une armature intermédiaire 4d entourant l'élément élastique 4c et une armature extérieure 4f disposée entre l'armature intermédiaire 4d et la bague externe 4b. L'armature extérieure 4f présente un canal 4e dans lequel sont disposé un liquide amortisseur et un élément saturateur 4g. L'articulation hydro élastique 4 n'est pas limitée à l'exemple illustré à la figure 4 et aux formes particulières des différents éléments la constituant. Le liquide amortisseur est, par exemple, du glycol afin d'obtenir un effet amortisseur suffisant.

Grâce à l'invention, l'amortissement de la composante longitudinale est amélioré par les deux moyens de liaison disposés sur un même axe vertical.

De plus, le dispositif de liaison est facile à mettre en place dans la mesure où il constitue un sous ensemble monté au préalable. Un tel sous ensemble est de ce fait adaptable à tous les types d'essieu.

## Revendications

1. Dispositif de liaison d'une roue à une structure de véhicule automobile comprenant un porte fusée de roue (2) supportant une fusée de roue (3), avec un premier axe sensiblement transversal (Y1), sur laquelle est montée à rotation la roue et deux moyens de liaison (4, 5) à la structure (6) du véhicule, le premier moyen de liaison (4) comprend une articulation hydro élastique, avec un deuxième axe sensiblement transversal (Y2), montée sur le port fusée de roue (2), **caractérisé en ce que** les moyens de liaison (4, 5) et la fusée de roue (3) sont disposés sur un même axe vertical (Z), perpendiculaire audit premier axe sensiblement transversal (Y1), le premier moyen de liaison (4) étant disposé entre la fusée de roue (3) et le deuxième moyen de liaison (5).

2. Dispositif de liaison selon la revendication 1, dans lequel le porte fusée de roue (2), la fusée de roue (3) et les moyens de liaison (4, 5) forment un sous ensemble unique monté sur la structure (6) du véhicule.

3. Dispositif de liaison selon la revendication 2, dans lequel l'articulation hydro élastique (4) comprend une bague intérieure (4a), une bague extérieure (4b), un élément élastique (4c) disposé entre lesdites bagues (4a, 4b) et un liquide amortisseur, l'articulation hydro élastique (4) étant montée sur un axe transversal (12) relié à la structure (6) du véhicule.

4. Dispositif de liaison selon l'une quelconque des revendications 1 à 3, dans lequel le deuxième moyen de liaison (5) comprend une articulation pivot (16) avec un troisième axe sensiblement transversal (Y₃) parallèle aux premier et deuxième axes transversaux (Y₁, Y₂) de manière à faire pivoter le dispositif de liaison (1) autour dudit axe transversal (Y₃) et à le guider en déplacement sur une trajectoire courbe longitudinale.

5. Dispositif de liaison selon la revendication 4, dans lequel la trajectoire est un arc de cercle centré sur le troisième axe transversal (Y₃) du deuxième moyen de liaison (5), l'axe transversal (Y₃) étant proche du point de contact de la roue sur le sol.

6. Dispositif de liaison selon la revendication 2, dans lequel le sous ensemble est monté directement sur la structure (6) du véhicule ou par l'intermédiaire d'un plateau fusée (15).

7. Dispositif de liaison selon l'une quelconque des revendications précédentes, dans lequel le deuxième moyen de liaison (5) comprend un roulement (16).

8. Dispositif de liaison selon la revendication précédente, dans lequel le roulement (16) est un roulement à rouleaux coniques ou à deux rangées de billes.

9. Dispositif de liaison selon l'une des revendications 3 à 8, dans lequel le liquide amortisseur est du glycol.

10. Véhicule automobile comprenant une caisse, au moins deux roues reposant sur le sol et un essieu (6) liant la caisse aux roues, **caractérisé en ce que** l'essieu (6) comprend un dispositif de liaison (1) selon l'une quelconque des revendications précédentes.

## Patentansprüche

1. Vorrichtung zur Verbindung eines Rads mit einer Kraftfahrzeugstruktur, umfassend einen Achsschenkelhalter (2), der einen Achsschenkel (3) stützt, mit einer ersten im Wesentlichen in Querrichtung verlaufenden Achse (Y1), an der das Rad drehbar angebracht ist, und zwei Mitteln (4, 5) zur Verbindung mit der Struktur (6) des Fahrzeugs, wobei das erste Verbindungsmittel (4) ein am Achsschenkelhalter (2) angebrachtes hydroelastisches Gelenk mit einer zweiten im Wesentlichen in Querrichtung (Y2) verlaufenden Achse umfasst, **dadurch gekennzeichnet, dass** die Verbindungsmittel (4, 5) und der Achsschenkel (3) auf einer gleichen vertikalen Achse (Z) angeordnet sind, die senkrecht zu der ersten im Wesentlichen in Querrichtung verlaufenden Achse (Y1) verläuft, wobei das erste Verbindungsmittel (4) zwischen dem Achsschenkel (3) und dem zweiten Verbindungsmittel (5) angeordnet ist.

2. Verbindungsvorrichtung nach Anspruch 1, wobei der Achsschenkelhalter (2), der Achsschenkel (3) und die Verbindungsmittel (4, 5) eine einzige Unteranordnung bilden, die an der Struktur (6) des Fahrzeugs angebracht ist.

3. Verbindungsvorrichtung nach Anspruch 2, wobei das hydroelastische Gelenk (4) einen inneren Ring (4a), einen äußeren Ring (4b), ein elastisches Element (4c), das zwischen den Ringen (4a, 4b) angeordnet ist, und eine Dämpfungsflüssigkeit umfasst, wobei das hydroelastische Gelenk (4) an einer mit der Struktur (6) des Fahrzeugs verbundenen Querachse (12) angebracht ist.

4. Verbindungsvorrichtung nach einem der Ansprüche 1 bis 3, wobei das zweite Verbindungsmittel (5) ein Drehgelenk (16) mit einer dritten im Wesentlichen in Querrichtung verlaufenden Achse (Y3) parallel zur ersten und zweiten Querachse (Y1, Y2) zum Schwenken der Verbindungsvorrichtung (1) um die Querachse (Y3) und zu ihrem verschiebbaren Führen auf einer gekrümmten Längsbahn umfasst.

5. Verbindungsvorrichtung nach Anspruch 4, wobei die Bahn ein auf der dritten Querachse (Y3) des zweiten Verbindungsmittels (5) zentrierter Kreisbogen ist, wobei die Querachse (Y3) nahe dem Kontaktpunkt des Rads auf dem Boden liegt.

6. Verbindungsvorrichtung nach Anspruch 2, wobei die Unteranordnung direkt oder mittels einer Achsschenkelplatte an der Struktur (6) des Fahrzeugs angebracht ist.

7. Verbindungsvorrichtung nach einem der vorhergehenden Ansprüche, wobei das zweite Verbindungsmittel (5) ein Wälzlager (16) umfasst.

8. Verbindungsvorrichtung nach einem der vorhergehenden Ansprüche, wobei das Wälzlager (16) ein Kegelrollenlager oder ein zweireihiges Kugellager ist.

9. Verbindungsvorrichtung nach einem der Ansprüche 3 bis 8, wobei die Dämpfungsflüssigkeit Glykol ist.

10. Kraftfahrzeug mit einer Karosserie, mindestens zwei auf dem Boden aufliegenden Rädern und einer Achse (6), die die Karosserie mit den Rädern verbindet, **dadurch gekennzeichnet, dass** die Achse (6) eine Verbindungsvorrichtung (1) nach einem der vorhergehenden Ansprüche umfasst.

## Claims

1. Device for connecting a wheel to a motor vehicle structure, comprising a steering knuckle carrier (2) carrying a steering knuckle (3), with a first substantially transverse axis (Y1) on which the wheel is rotatably mounted, and two means (4, 5) for connection to the structure (6) of the vehicle, the first connection means (4) comprising a hydroelastic joint, with a second substantially transverse axis (Y2), mounted on the steering knuckle carrier (2), **characterized in that** the connection means (4, 5) and the steering knuckle (3) are arranged over the same vertical axis (Z), perpendicular to said first substantially transverse axis (Y1), the first connection means (4) being arranged between the steering knuckle (3) and the second connection means (5).

2. Connection device according to Claim 1, wherein the steering knuckle carrier (2), the steering knuckle (3), and the connection means (4, 5) form a single sub-assembly mounted on the structure (6) of the vehicle.

3. Connection device according to Claim 2, wherein the hydroelastic joint (4) comprises an inner ring (4a), an outer ring (4b), a resilient element (4c) arranged between said rings (4a, 4b), and a cushioning liquid, the hydroelastic joint (4) being mounted on a transverse axis (12) connected to the structure (6) of the vehicle.

4. Connection device according to any one of Claims 1 to 3, wherein the second connection means (5) comprises a pivot joint (16) with a third substantially transverse axis (Y₃) parallel to the first and second transverse axes (Y₁, Y₂) so as to pivot the connection device (1) about said transverse axis (Y₃) and so as to guide it in displacement over a longitudinal curved path.

5. Connection device according to Claim 4, wherein the path is an arc of a circle centred on the third transverse axis (Y₃) of the second connection means (5), the transverse axis (Y₃) being close to the point of contact of the wheel on the ground.

6. Connection device according to Claim 2, wherein the sub-assembly is mounted directly on the structure (6) of the vehicle or by means of a knuckle plate (15).

7. Connection device according to any one of the preceding claims, wherein the second connection means (5) comprises a rolling bearing (16).

8. Connection device according to the preceding claim, wherein the rolling bearing (16) is a tapered roller bearing or a duplex bearing.

9. Connection device according to one of Claims 3 to 8, wherein the cushioning liquid is glycol.

10. Motor vehicle comprising a body, at least two wheels resting on the ground and an axle (6) connecting the body to the wheels, **characterized in that** the axle (6) comprises a connection device (1) according to any one of the preceding claims.
